# FASCICULE DE BREVET EUROPEEN

(11) **EP 4 143 422 B1**
(45) Date de publication et mention de la délivrance du brevet: **20.03.2024**
(21) Numéro de dépôt: 21732951.5
(22) Date de dépôt: 28.04.2021
(51) Int. Cl.: F01D 11/00, F01D 9/04, F01D 11/12, F01D 25/24

(54) **MONTAGE D'UN ANNEAU D'ETANCHEITE SUR UNE TURBOMACHINE AERONAUTIQUE**
MONTAGE EINES DICHTUNGSRINGS AUF EINEM FLUGZEUGTURBINENTRIEBWERK
MOUNTING OF A SEALING RING ON AN AERONAUTICAL TURBINE ENGINE

(30) Priorité: 30.04.2020 FR 2004336
(43) Date de publication de la demande: 08.03.2023
(73) Titulaire: SAFRAN AIRCRAFT ENGINES, 75015 Paris (FR)
(72) Inventeur: MORLIERE, Simon, Nicolas, 77550 MOISSY-CRAMAYEL (FR); BEAUQUIN, Nicolas, Jean-Marc, Marcel, 77550 MOISSY-CRAMAYEL (FR); FACHAT, Thierry, 77550 MOISSY CRAMAYEL (FR); GENDRAUD, Alain, Dominique, 77550 MOISSY-CRAMAYEL (FR)
(74) Mandataire: Ernest Gutmann - Yves Plasseraud S.A.S.
(86) Numéro de dépôt international: PCT/FR2021/050737
(87) Numéro de publication internationale: WO 2021/219960

(56) Documents cités:
- EP-A1- 1 847 686
- EP-A1- 1 975 374
- EP-A1- 2 060 743
- EP-B1- 1 847 686
- EP-B1- 1 975 374
- EP-B1- 2 060 743
- FR-A1- 2 989 722
- FR-A1- 3 016 391
- US-A- 5 593 277

## Description

### Domaine technique

L'invention concerne, dans le domaine des turbomachines aéronautiques, la conception des systèmes d'étanchéité et de fixation entre un distributeur et un d'élément d'étanchéité pour un aubage mobile de la turbomachine, en particulier en liaison avec la capacité offerte d'accéder à la périphérie extérieure de d'élément d'étanchéité (qui peut en particulier être ce qui est typiquement nommé un anneau d'étanchéité ou OSAS) et/ou une zone de carter qui l'environne.

### Technique antérieure

A partir de EP2060743, on connait un exemple d'ensemble pour turbomachine aéronautique s'étendant autour d'un axe (X) et comprenant :
- un carter amont disposé autour de l'axe X et auquel est fixé un aubage de distributeur, le carter amont étant suivi axialement, vers l'aval, par
- un carter aval disposé autour de l'axe X, sur lequel est monté un élément d'étanchéité pourvu d'un matériau abradable destiné à venir en regard d'un aubage mobile de la turbomachine configuré pour tourner autour de l'axe X.

Une proposition passée a été de disposer un élément de type circlip entre les carters amont et aval.

Il est noté que dans la présente demande :
- axial ou axialement a pour sens : suivant l'axe de rotation de l'aubage mobile, ou parallèlement à lui, lequel axe est aussi l'axe longitudinal de la turbomachine autour duquel tournent les aubages (mobiles) de la(des) turbine(s), du(des) compresseur(s), et de la soufflante si elle existe,
- « radialement » a pour sens transversalement à l'axe X, donc suivant l'axe Z ; donc, radialement, est externe ce qui est plus éloigné dans l'axe X que ce qui est interne, et
- « amont » et « aval » se comprennent axialement, par rapport au sens général de circulation d'un fluide qui entre en amont et ressort en aval.

Une autre proposition a été, comme dans FR 2914350, de prévoir un unique carter et d'y fixer, l'un en aval de l'autre, le distributeur et l'aubage mobile en les accrochant à des crochets du carter.

Par ailleurs, FR3016391 divulgue un ensemble de turbomachine aéronautique selon le préambule de la revendication 1, en présentant une solution où le carter aval comprend un crochet amont sur lequel est monté l'élément d'étanchéité pour sa fixation au carter aval.

Un problème est l'accessibilité à certains au moins de ces crochets et/ou à la périphérie extérieure de l'anneau d'étanchéité, là où il est accroché.

En effet, dans le cas d'une crique sur un crochet ou sur cette zone de l'anneau d'étanchéité, un démontage complet local de la zone concernée de la turbomachine peut être nécessaire, ce qui peut engendrer des problèmes de mise en oeuvre, de temps et de coûts délicats à gérer.

L'invention a pour but de résoudre certains au moins des inconvénients précités.

### Résumé de l'invention

Afin d'améliorer la situation, le présent document propose que l'ensemble précité comprenant lesdits carter amont et aval soit conforme à la revendication 1, et donc tel qu'il comprenne:
- un carter amont disposé autour de l'axe et auquel est fixé un aubage de distributeur, le carter amont étant suivi axialement, vers l'aval, par
- un carter aval disposé autour de l'axe, sur lequel est monté un élément d'étanchéité pourvu d'un matériau abradable destiné à venir en regard d'un aubage mobile de la turbomachine configuré pour tourner autour de l'axe,
- une virole annulaire interposée, autour dudit axe, entre le carter amont et le carter aval, et
- des moyens de fixation amovibles pour fixer entre eux la virole annulaire, le carter amont et le carter aval de façon démontable, et :
   -- soit la virole annulaire présente un crochet amont sur lequel est monté l'élément d'étanchéité pour sa dite fixation au carter aval,
   -- soit le carter aval présente un crochet amont sur lequel est monté l'élément d'étanchéité pour sa dite fixation au carter aval,
   ledit ensemble étant en outre tel que, pour sa dite fixation au carter amont (55), le distributeur est monté sur un crochet aval du carter amont, sans être crocheté à la virole annulaire.

Il est conseillé que, dans le second cas, la virole annulaire soit dépourvue d'un tel crochet amont d'accrochage dudit élément d'étanchéité, ceci étant favorable au montage en termes de facilité, rapidité, efficacité mécanique - notamment transferts d'efforts, isostatisme, etc.... Autrement dit, on conseille :
- si le carter aval présente un crochet amont d'accrochage de l'élément d'étanchéité avec lequel l'élément d'étanchéité est engagé pour sa dite fixation au carter aval,
- que la virole annulaire soit dépourvue de tout crochet amont d'accrochage visant à ladite fixation de l'élément d'étanchéité au carter aval.

L'expression « monté(e) sur » inclut que la première pièce citée puisse être accroché(e) à la seconde pièce.

L'élément d'étanchéité précité étant annulaire, en une partie, ou comme préféré en plusieurs parties sectorisées autour duit axe (X), l'expression « anneau d'étanchéité » est utilisée ci-après comme synonyme ou mode possible de réalisation dudit élément d'étanchéité, tout en indiquant ainsi implicitement que ledit élément d'étanchéité s'étend circonférentiellement autour dudit axe (X).

Quoi qu'il en soit, une fois la virole annulaire démontée, il sera possible, a priori par l'amont (dès lors que ledit aubage mobile sera situé immédiatement à l'aval du distributeur), d'accéder à la périphérie extérieure de l'anneau d'étanchéité et/ou à une zone de carter qui l'environne. Une accessibilité au distributeur et à la zone de carter qui l'environne sera aussi possible, d'ailleurs.

On aura compris que la solution proposée passe par la manière de fixer aux carters concernés le distributeur et l'anneau d'étanchéité. Aussi est-il en outre suggéré que :
- pour sa dite fixation au carter amont, le distributeur de la turbomachine soit accroché en outre à un crochet amont du carter amont situé plus en amont du carter amont que le crochet aval du carter amont, et/ou que,
- pour sa dite fixation au carter aval, l'anneau d'étanchéité est accroché en outre à un crochet aval du carter aval situé plus en aval du carter aval que le crochet amont d'accrochage de l'anneau d'étanchéité.

Ainsi, on pourra réaliser ces accrochages complémentaires de façon assez traditionnelle, malgré l'originalité de conception précitée avec la virole annulaire démontable et son environnement structurel également précité.

Pour cette dite fixation au carter aval, l'anneau d'étanchéité pourra notamment être maintenu pincé entre un crochet du carter aval et une partie de distributeur elle-même située plus en aval.

Si la virole annulaire présente un crochet amont d'accrochage de l'anneau d'étanchéité, on pourra en outre souhaiter :
- que l'anneau d'étanchéité comprenne un rebord amont définissant une excroissance en saillie vers l'amont par rapport au matériau abradable, et
- que le crochet amont de la virole annulaire présente un rebord circonférentiel qui (sera double en ce qu'il) comprendra une paroi radialement intérieure et une paroi radialement extérieure entre lesquelles le rebord amont de l'anneau d'étanchéité pourra être engagé.

Ainsi, on disposera, sur la virole annulaire, d'un crochet ouvert vers l'aval, formant une gorge circonférentielle dans laquelle sera montée (une partie structurelle en saillie vers l'amont de) l'anneau d'étanchéité.

Ceci permet non seulement d'éviter de prévoir sur le carter aval un crochet amont de d'accrochage amont de l'anneau d'étanchéité, mais aussi de bien positionner/centrer l'anneau d'étanchéité, tout en sécurisant sa fixation grâce à la gorge circonférentielle créée. Toujours si la virole annulaire présente un crochet amont d'accrochage de l'anneau d'étanchéité, on pourra aussi souhaiter que ladite paroi radialement extérieure du rebord circonférentiel double soit axiale et qu'un rebord radialement intérieur du carter aval soit en butée avec lui.

Ceci favorisera le positionnement relatif des carters, et leurs maintiens respectifs, notamment eu égard aux contraintes thermiques et mécaniques rencontrées et/ou de montage/démontage.

A ce sujet, et pour une telle finalité encore renforcée, le carter amont pourra présenter un rebord d'extrémité aval tourné radialement vers l'extérieur et présentant (se terminant par) un épaulement circonférentiel axial configuré pour recouvrir de façon radialement extérieure l'extrémité amont du carter aval, là où il pourra présenter un rebord d'extrémité amont tourné radialement vers l'intérieur.

Pour renforcer d'ailleurs encore les aspects précités de positionnement/centrage de l'anneau d'étanchéité et de sécurisation de sa fixation, on pourra aussi souhaiter que tant la paroi radialement intérieure que la paroi radialement extérieure formant ladite gorge circonférentielle soit axiales, de même que ledit rebord amont de l'anneau d'étanchéité, assurant ainsi un positionnement et des engagement/dégagement relatifs axiaux, facilitant les montage/démontage.

Encore pour ces aspects de positionnement relatif des carters, de maintiens respectifs et de résistance aux contraintes mécaniques, il a aussi été prévu que, dans le cas où la virole annulaire serait dépourvue de crochet amont d'accrochage de l'élément d'étanchéité (cas où donc ce crochet amont est sur le carter aval), ladite virole annulaire puisse présenter un rebord circonférentiel axial avec lequel sera en butée un rebord radialement intérieur du carter aval.

Ainsi, on pourra en particulier disposer aussi dans ce cas d'une solution présentant une bonne tenue du carter aux charges.

Il est par ailleurs aussi proposé :
- que des joints d'étanchéité amont et des joints d'étanchéité aval soient établis entre la virole annulaire et respectivement, en amont, le distributeur et, en aval, l'anneau d'étanchéité, et,
- que, de façon radialement extérieure par rapport auxdits joints d'étanchéité, la virole annulaire présente au moins un canal ou circuit faisant, pour la ventilation, communiquer :
   -- un volume amont défini entre la virole annulaire, le carter amont et le distributeur et qui sera isolé, par les joints d'étanchéité amont, d'une veine de fluide dans laquelle s'étendent, de façon radialement intérieure par rapport auxdits joints d'étanchéité, une partie du distributeur et une partie de l'aubage mobile, et
   -- un volume aval défini entre la virole annulaire, le carter aval et l'aubage
   mobile et qui sera isolé de ladite veine de fluide par les joints d'étanchéité aval.

Ainsi, on pourra favoriser l'étanchéité, et donc limiter les fuites et passages de fluide chaud de ladite veine vers l'extérieur et en particulier vers ces zones d'accrochage/de suspension du distributeur et de l'anneau d'étanchéité.

Pour favoriser aussi cette étanchéité, il est également proposé que la virole annulaire présente une extrémité radialement intérieur, de part et d'autre de laquelle peuvent s'étendre (jusqu'à proximité immédiate de préférence) :
- en amont, une butée axiale du distributeur, en butée avec une surface radiale de la virole annulaire,
- en aval une excroissance d'extrémité amont de l'anneau d'étanchéité en saillie vers l'amont par rapport au matériau abradable.

De nouveau pour favoriser l'étanchéité précitée et un positionnement stable précis et d'accès assez aisé de la virole annulaire, il est encore proposé :
- que, de part et d'autre de la virole annulaire, le carter amont et le carter aval présentent chacun un rebord radial à travers lesquels passent, en tant que moyens de fixation amovibles, des boulons assurant ladite fixation démontable de la virole annulaire, et
- que la virole annulaire se présente comme un anneau radial qui se prolonge radialement vers l'intérieur, au-delà desdits rebords radiaux du carter amont et du carter aval, et au-delà dudit rebord circonférentiel, jusqu'à une extrémité interposée axialement entre le distributeur et l'anneau d'étanchéité.

Une turbomachine aéronautique comprenant un ensemble est aussi concernée par l'invention.

### Brève description des dessins

[Fig. 1] la figure 1 schématise une turbomachine aéronautique à double flux suivant une vue de côté (demi-coupe longitudinale symétrique par rapport à) l'axe X).
[Fig. 2] la figure 2 schématise une partie du compresseur basse pression de la turbomachine de la figure 1, en coupe selon l'axe X, cette partie tant pourvue d'une solution conforme à l'invention, suivant un premier mode de réalisation.
[Fig. 3] la figure 3 schématise la même partie du compresseur basse pression que la figure 2, en coupe selon l'axe X, mais avec un second mode de réalisation d'une solution conforme à l'invention.
[Fig. 4] la figure 4 représente une partie agrandie de la vue de la figure 2.
[Fig. 5] la figure 5 représente une partie agrandie de la vue de la figure 3.

### Description des modes de réalisation

L'exemple, non limitatif, d'application et de solution conforme à l'invention qui suit concerne la possibilité de permettre la réparation de l'OSAS (ou anneau d'étanchéité) du premier étage de la turbine basse pression d'une turbomachine aéronautique et/ou de permettre une réparation ou un remplacement aisé du crochet concerné, si celui-ci est sur la virole (repère 66 ci-après).

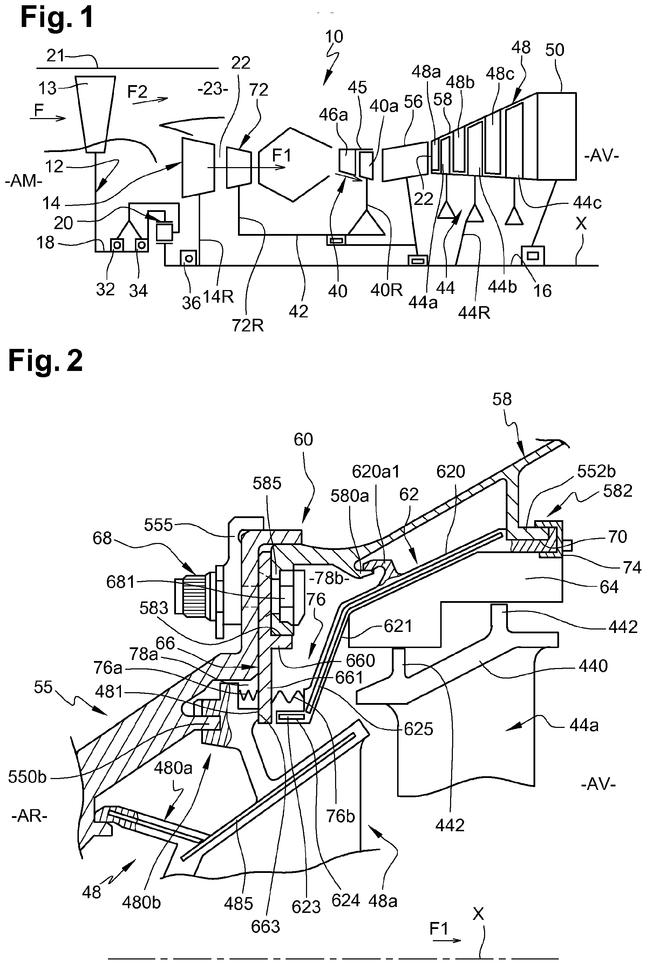

Ainsi, la figure 1 représente une turbomachine 10 qui peut inclure tout ou partie des caractéristiques selon l'invention présentées ci-avant.

Dans la description qui suit, des chiffres de référence identiques désignent des pièces identiques ou ayant des fonctions similaires.

La turbomachine 10 à gaz est ici un turboréacteur à double flux et à double corps.

La turbomachine 10 comprend, d'amont (AM) vers l'aval (AV) selon le sens d'écoulement des flux de gaz F dans la turbomachine, une soufflante 12, un compresseur basse-pression 14, un compresseur haute-pression 72, une chambre annulaire de combustion 43, une turbine haute-pression 40 et une turbine basse-pression 44. Le rotor 72R du compresseur haute-pression 72 et le rotor 40R de la turbine haute-pression 40 sont reliés par un arbre haute-pression (HP) 42 et forment avec lui un corps haute-pression. Le rotor 14R du compresseur basse-pression 14 et le rotor 44R de la turbine basse-pression 44 sont reliés par un arbre basse-pression (BP) 16 et forment avec lui un corps basse-pression. Dans la partie amont de la turbomachine 10, la soufflante 12 comporte des pales 13 qui sont reliées à un arbre de soufflante 18 qui, dans l'exemple représenté, est lié en rotation à l'arbre BP 16 par l'intermédiaire d'un réducteur 20. La soufflante 12 et le compresseur basse pression 14 forment ainsi un module amont basse pression de la turbomachine. Les arbres HP 42 et BP 16 s'étendent suivant l'axe X longitudinal de la turbomachine 10. La turbomachine 10 comprend également un carter de soufflante 21 qui s'étend autour des pales 12 et qui définit une veine d'entrée d'air des flux F.

Une partie F1 de l'air F pénètre dans une veine annulaire interne 22 d'écoulement d'un flux primaire et l'autre partie F2 alimente une veine annulaire externe 23 d'écoulement d'un flux secondaire.

La veine 22 traverse les compresseurs basse-pression 14 et haute-pression 72, la chambre de combustion 43 et les turbines haute-pression 40 et basse-pression 44. La veine externe 23 enveloppe des carters des compresseurs et des turbines et rejoint la veine primaire 22 dans une tuyère (non représentée) de la turbomachine 10. Les turbines HP 40 et BP 44 sont chacune logées dans un carter 45 de turbine HP et un carter 58 de turbine BP correspondants, qui portent des séries fixes de distributeurs correspondants, tels que 46a et 48a, 48b, 48c interposés entre des séries d'aubes mobiles, tels que 40a, 44a, 44b, 44c. En aval du carter 58 de turbine BP, un carter d'échappement 50 permet l'évacuation des gaz ayant circulé dans la veine primaire 22. Un carter inter-turbines 55 est disposé entre les turbines HP 40 et BP 44, et plus particulièrement entre le carter 45 de turbine HP et le carter 58 de turbine BP.

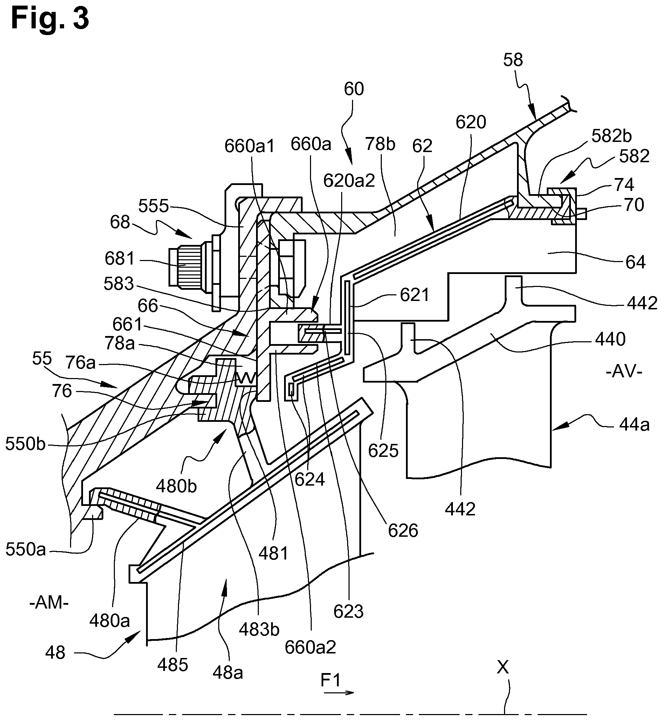

**Les deux réalisations possibles de la solution de l'invention qui ont plus particulièrement été imaginées et sont schématisées sur les** **figures 2** **et** **3** **se présentent comme suit.**

D'abord, et comme on peut le constater sur les détails de ces figures 2 et 3, la solution de l'invention peut en particulier s'appliquer à l'endroit d'une zone de liaison entre un carter amont et un carter aval, au niveau de la turbine BP 48.

Cette zone, qui peut ainsi correspondre à celle repérée I sur la figure 1, et donc à la zone qui relie le carter inter-turbines 56 et le carter 58 de turbine BP, illustre un ensemble 60 de turbomachine aéronautique s'étendant autour de l'axe X et comprenant des moyens facilitant l'accès à l'OSAS (62 ci-après).

Dans un tel ensemble, tel celui repéré donc 60, un aubage de distributeur, telle premier 48a de la turbine BP 48, est fixé en périphérie extérieure au carter amont, tel que le carter 55, lequel est donc suivi axialement, vers l'aval, par le carter aval, tel que le carter de turbine BP 58, disposé lui aussi autour de l'axe X.

A ce carter aval est fixé, aussi en périphérie extérieure, un élément d'étanchéité 62 pourvu d'un matériau abradable 64 destiné à venir en regard d'un aubage mobile, tel que l'aubage 44a configuré pour tourner autour de l'axe X.

Comme on l'a noté ci-avant, on dénommera ci-après par convention « anneau d'étanchéité » l'élément d'étanchéité 62.

En périphérie extérieure, l'anneau d'étanchéité 62 comprend une structure annulaire 620 présentant en périphérie extérieure un élément de fixation amont et un élément de fixation aval, pour être fixée au carter aval 48.

En périphérie intérieure, la structure annulaire 620 comprend le matériau abradable 64 qui est disposé radialement au droit d'un aubage mobile 44a.

La structure annulaire 620 peut typiquement se présenter, autour de l'axe X, comme un anneau monobloc ou formé de secteurs circonférentiels successifs (typiquement nommés secteurs d'anneau), de même pour le matériau abradable 64 qui peut comprendre une succession circonférentielle de blocs.

Comme tout aubage mobile, l'aubage 44a comprend des aubes mobiles se succédant circonférentiellement autour de l'axe X, chacune présentant en périphérie extérieure une succession de plateformes d'aubes mobiles, telle celle 440, chacune pourvue de léchettes (ou éléments d'étanchéité) externes 442 entouré(e)s extérieurement avec un faible jeu radial par du matériau abradable 64.

Pour faciliter l'accès précité, l'ensemble 60 comprend en outre une virole 66 annulaire interposée, autour de l'axe X, entre le carter amont 55 et le carter aval 58, et des moyens 68 de fixation amovibles pour fixer entre eux la virole 66, le carter amont 55 et le carter aval 58, de façon démontable.

Pour sa fixation 480b au carter amont, le distributeur, ici donc 48a, est monté sur un crochet aval 550b du carter amont 55, sans être crocheté à (c'est-à-dire accroché au contact avec) la virole 66.

Quant à la fixation au carter aval, deux solutions sont donc proposées :
- soit la virole 66 présente un crochet amont 660a d'engagement avec l'anneau d'étanchéité 62 pour sa dite fixation au carter aval ; voir figure 3,
- soit le carter aval 58 présente un crochet amont 580a avec lequel est engagé l'anneau d'étanchéité 62 pour sa fixation au carter aval, la virole annulaire 66 étant alors dépourvue d'un tel crochet amont sur lequel est monté l'élément d'étanchéité; voir figure 2.

Dans la description, crochet et rail sont synonymes, de même pour crocheté et accroché. Ainsi, l'anneau d'étanchéité 62 comme le distributeur 48a sont accrochés chacun avec des rails formés sur le carter amont, le carter aval, ou la virole 66 annulaire.

Le crochet amont, suivant le cas 660a ou 580a, correspond à l'élément de fixation amont précité.

Si le choix se porte sur la solution d'un crochet (ou rail) amont 580a sur le carter aval, comme sur la figure 2, alors ce crochet permet l'accrochage d'un crochet coopérant 620a1 définissant une fixation amont pour l'anneau d'étanchéité 62.

Le crochet (ou rail) amont 580a1 fait saillie en périphérie extérieure de la structure annulaire 620.

Si le choix se porte sur la solution d'un crochet (ou rail) amont 660a sur la virole 66, comme sur la figure 3, alors ce crochet permet l'accrochage d'un crochet 620a2 coopérant définissant une fixation amont pour l'anneau d'étanchéité 62.

Le crochet (ou rail) amont 620a2 fait saillie en périphérie extérieure de la structure annulaire 620.

Pour en outre une fixation aval 582 au carter aval, ici 58, l'anneau d'étanchéité 62 peut être en outre être monté sur un crochet aval 582b du carter aval 58 situé plus en aval de ce carter aval que le crochet amont 660a ou 580a d'accrochage.

En particulier, l'élément de fixation aval 582 peut être défini, sur la structure annulaire 620, par une gorge annulaire 70 débouchant radialement vers l'extérieur et dans laquelle est monté ajusté le rail ou crochet aval 582b.

Un crochet additionnel circonférentiel 74 peut venir sécuriser la fixation en prenant radialement en sandwich, le rail ou crochet aval 482b et une partie aval de la structure annulaire 620.

Les rails ou crochets 580a, 582b, 550b, 660a s'étendent vers l'aval.

Les rails ou crochets associés 620a1, 74, 480b, 620a2 respectifs s'étendent vers l'amont. Engagé par l'aval, le crochet additionnel circonférentiel 74 peut être ouvert vers l'amont. On pourra toutefois préférer que, pour sa fixation aval 582, l'anneau d'étanchéité 62 soit maintenu sur le crochet aval 582b, en étant pincé là par une partie de distributeur située juste en aval (non représenté) elle-même plaquée contre le crochet aval 582b par une lame longeant la surface intérieure du carter aval, en périphérie extérieure de cette partie de distributeur.

Pour en outre une fixation amont 480a au carter amont 55, le distributeur, ici 48a, est en outre monté sur (accroché à) un crochet amont 550a du carter amont. Ce crochet amont 550a est situé plus en amont du carter amont 55 que le crochet aval 550b.

Comme tout distributeur, celui 48a comprend des aubes fixes se succédant circonférentiellement autour de l'axe X, chacune présentant en périphérie extérieure une plateforme 485, les crochets ou rails amont 480a et aval 480b d'accrochage précités sont formés en extrémité libre d'un becquet, respectivement amont 483a et aval 483b, monté sur des crochets respectifs du carter.

Les rails ou crochets associés 620a1, 74, 480b, 620a2 respectifs s'étendent vers l'amont. Alors que les crochets ou rails 580a, 582b, 550b, 620a1, 620a2 peuvent être formés d'excroissances simples, les crochets ou rails 480b, 660a, 74 pourront être formés d'excroissances doubles.

Ainsi, dans un cas qui peut être celui de la figure 3, a-t-on prévu de privilégier :
- que l'anneau d'étanchéité 62 comprenne, en tant que crochet amont 620a2, un rebord amont définissant une excroissance en saillie vers l'amont par rapport au matériau abradable 64, et
- que le crochet amont 660a de la virole annulaire 66 présente un rebord ou un rail circonférentiel double qui présente une paroi radialement extérieur 660a1 et une paroi radialement intérieure 660a2 entre lesquelles le rebord amont formant le crochet 620a2 de l'élément d'étanchéité est engagé.

Pour une orientation favorable des efforts, les crochets amont 620a2 et 660a (donc les parois 660a1 ,660a2 si elles existent) seront axiaux, comme les extrémités libres des autres crochets ou rails.

Pour le calage des pièces concernées et une transmission favorable des efforts, on pourra par ailleurs prévoir qu'une butée radiale soit assurée par l'intermédiaire de la virole annulaire 66.

Deux possibilités imaginées :
- comme illustré sur la figure 2, que, la virole annulaire 66 étant dépourvue de crochet amont sur lequel est monté l'anneau d'étanchéité 62, la virole annulaire présente un rebord circonférentiel axial 660 avec lequel est en butée (une extrémité libre) d'un rebord radialement intérieur 583 du carter aval 58, ou
- comme illustré sur la figure 3, que le rebord circonférentiel radialement extérieur 660a1 soit axial et qu'(une extrémité libre d')un rebord radialement intérieur 583 du carter aval 58 soit en butée avec lui.

Pour une fixation tant pérenne qu'aisée à mettre en oeuvre et démontable, les moyens de fixation 68 traverseront axialement de préférence successivement le carter amont 55, la virole 66 et le carter aval 58.

A cette fin, axialement de part et d'autre de la virole annulaire 66, le carter amont 55 et le carter aval 58 présenteront utilement chacun un rebord radial, respectivement 555 ou 585 (voir les figures 2,3), à travers lesquels pourront passer, en tant que dits moyens de fixation amovibles, des boulons 681 assurant ladite fixation démontable de la virole annulaire 66. Le rebord radial 555 s'étend vers l'extérieur. Le rebord radial 585 s'étend vers l'intérieur. Les boulons 681 seront régulièrement répartis circonférentiellement, autour de l'axe X.

Par ailleurs, la virole annulaire 66 se présentera alors utilement comme un anneau radial qui se prolonge, radialement vers l'intérieur :
- au-delà desdits rebords radiaux 555 ou 585 du carter amont et du carter aval,
- et au-delà du rebord circonférentiel 660 ou 660a1,
- jusqu'à une extrémité 661 interposée axialement entre le distributeur 48a et l'anneau d'étanchéité 62.

Ainsi on favorisera un double effet : mécanique et d'étanchéité.

Notamment dans ce cas, on pourra aussi prévoir, aux mêmes fins, que la virole annulaire 66 présente une extrémité radialement intérieure, repérée aussi 660 aux figures 2,3, axialement de part et d'autre de laquelle s'étendront :
- en amont, une butée axiale 481 du distributeur 48a, en butée avec une surface radiale 663 de la virole annulaire 66, et
- en aval, une excroissance 623 d'extrémité amont de l'anneau d'étanchéité 62, en saillie vers l'amont par rapport au matériau abradable 64.

La butée axiale 481 pourra utilement être formée, en périphérie extérieure de chacune des aubes fixes du distributeur 48a, par un rebord radial en face aval de la nervure aval 483b qui intègre à son extrémité le crochet aval 480b.

Pour la maîtrise des efforts, la butée axiale 481 sera utilement formée sensiblement coaxialement à l'accrochage entre les crochets 480b et 550b.

L'étanchéité dans cette zone, autour de la virole annulaire 66, a par ailleurs été travaillée, afin de limiter les fuites de fluide (chaud) F1 depuis la veine 22 vers la périphérie extérieure, au-delà des plateformes 485, 440, voire jusqu'au carter amont 55 et/ou aval 58.

De façon à protéger ces carters et les accrochages précités du distributeur 48a et de l'anneau d'étanchéité 62, il est en outre proposé que des joints d'étanchéité 76 soient établis entre la virole annulaire 66 et respectivement, en amont, le distributeur 48a et, en aval, l'anneau d'étanchéité 62.

Deux solutions sont proposées pour ces joints d'étanchéité 76 :
- soit les joints d'étanchéité 76 comprennent des joints d'étanchéité amont 76a et aval 76b, tels que des joints omégas, établis entre la virole annulaire 66 et respectivement, en amont, une face radiale du distributeur 48a et, en aval, une face radiale de l'anneau d'étanchéité 62, comme sur la figure 2,
- soit les joints d'étanchéité 76 comprennent un joint d'étanchéité amont sectorisé 76a et, en tant que joint aval, le crochet ou rail 620a2 (sur sa partie non engagée vers l'amont dans le rail 660a), ces joints étant établis entre la virole annulaire 66 et respectivement, en amont, une face radiale du distributeur 48a et, en aval, une partie radiale 621 de la structure annulaire 620 située en amont du matériau abradable 64, comme sur la figure 3.

C'est au-delà de la partie radiale 621, en la prolongeant radialement vers l'intérieur et vers l'amont, que l'excroissance 623 définie l'extrémité amont de la structure annulaire 620 de l'anneau d'étanchéité 62.

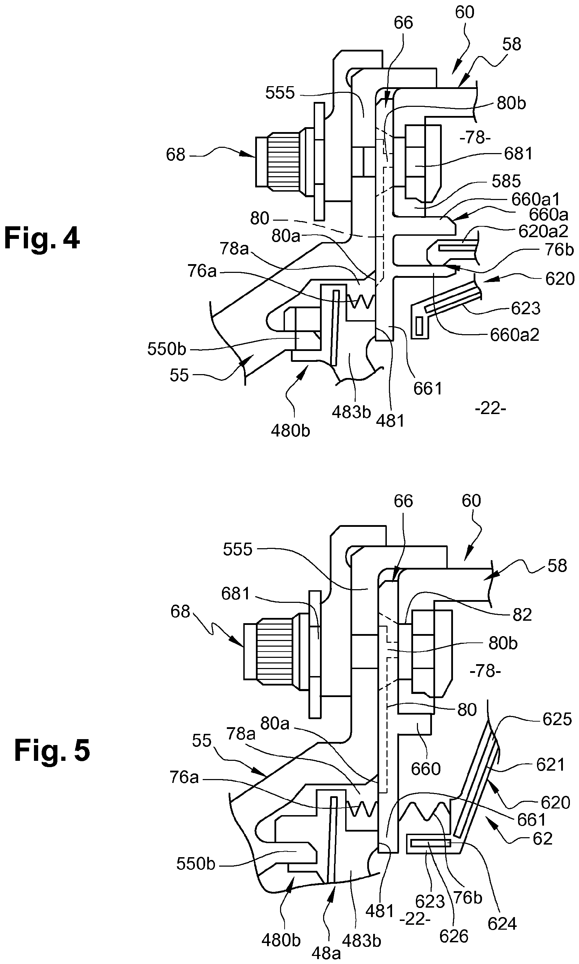

Ainsi, pourra-t-on créer de façon radialement extérieure par rapport à ces joints 76 :
- un volume amont 78a défini entre la virole annulaire 66, le carter amont 55 et le distributeur 48a (l'extrémité de sa nervure 483b), ce volume amont 78a étant isolé, par les joints d'étanchéité amont 76a, voire aussi par l'appui aval 481 contre la virole annulaire 66 et l'accrochage 480b, de la veine 22, et
- un volume aval 78b défini entre la virole annulaire 66, le carter aval 58 et l'anneau d'étanchéité 62 (sa structure annulaire 620), ce volume aval 78b étant isolé de ladite veine 22 par les joints d'étanchéité aval 76b : appui d'accrochage entre le rail 660a et le crochet 620a qui y est engagé notamment à cette fin, comme dans la solution de la figure 4, ou joints structurels, tels des joints oméga, comme dans la solution de la figure 5.

Une fois créé ces volumes amont 78a et aval 78b, il va par ailleurs être possible d'améliorer encore la lutte contre l'élévation de température autour de la veine 22.

Ainsi est-il alors proposé que, de façon radialement extérieure par rapport aux joints d'étanchéité 76a, la virole annulaire 66 présente au moins un canal ou circuit de ventilation 80 faisant communiquer lesdits volumes amont et aval 78a, 78b.

Pour cette communication, le circuit de ventilation 80 présente au moins une ouverture amont 80a débouchant dans le volume amont 78a et au moins une ouverture aval 80a débouchant sur l'un des passages 82 qui traverse le rebord 585 pour laisser passer et l'un des moyens de fixation 68. De la sorte, le circuit de ventilation 80 communique avec le volume aval 78a.

A noter encore que, dans les parties formant des portions de rail 621,623, voire aussi 620a2 quand cette partie existe, seront de préférence présentes des languettes d'étanchéité 624, 626 assurant l'étanchéité inter-secteurs de l'anneau d'étanchéité 62.

Ainsi, on pourra choisir que l'élément d'étanchéité 62, en particulier sa structure annulaire 620, soit circonférentiellement formé(e) en plusieurs parties sectorisées autour de l'axe X.

Dans ce cas, on pourra en outre donc utilement prévoir :
- que les excroissances 623 d'extrémité amont, voire que les parties radiales 621, de deux telles parties sectorisées, circonférentiellement successives, de l'élément d'étanchéité 62, en particulier sa structure annulaire 620, soient reliées circonférentiellement entre elles par des languettes d'étanchéité 624, 625, et/ou
- que les rebords amonts 620a2 de deux telles parties sectorisées circonférentiellement successives de l'élément d'étanchéité 62, en particulier sa structure annulaire 620, soient reliées circonférentiellement entre elles par des languettes d'étanchéité 626.

## Revendications

1. Ensemble de turbomachine aéronautique s'étendant autour d'un axe (X) et comprenant :
- un carter amont (55) disposé autour de l'axe (X) et auquel est fixé un aubage de distributeur (48a), le carter amont (55) étant suivi axialement, vers l'aval, par
- un carter aval (58) disposé autour de l'axe (X), sur lequel est monté un élément d'étanchéité (62) pourvu d'un matériau abradable (64) destiné à venir en regard d'un aubage mobile (44a) de la turbomachine configuré pour tourner autour de l'axe (X),
- une virole annulaire (66) interposée, autour dudit axe (X), entre le carter amont (55) et le carter aval (58), et
- des moyens de fixation amovibles (68) pour fixer entre eux la virole annulaire (66), le carter amont (55) et le carter aval (58) de façon démontable, et :
-- soit la virole annulaire (66) présente un crochet amont (660a) sur lequel est monté l'élément d'étanchéité (62) pour sa dite fixation au carter aval (58),
-- soit le carter aval (58) présente un crochet amont (580a) sur lequel est monté l'élément d'étanchéité (62) pour sa dite fixation au carter aval (58),
**caractérisé en ce que** :
- pour sa dite fixation au carter amont (55), le distributeur (48a) est monté sur un crochet aval (550b) du carter amont (55), sans être crocheté à la virole annulaire (66).

2. Ensemble selon la revendication 1, dans lequel :
- si le carter aval (58) présente ledit crochet amont (580a) sur lequel est monté l'élément d'étanchéité (62) pour sa dite fixation au carter aval,
- alors la virole annulaire est dépourvue d'un tel crochet amont d'accrochage visant à ladite fixation de l'élément d'étanchéité (62) au carter aval.

3. Ensemble selon la revendication 1 ou 2, dans lequel, pour sa dite fixation au carter amont (55), le distributeur (48a) est en outre monté sur un crochet amont (550a) du carter amont (55) situé plus en amont du carter amont (55) que le crochet aval (550b) du carter amont (55).

4. Ensemble selon l'une des revendications précédentes, dans lequel, pour sa dite fixation au carter aval (58), l'élément d'étanchéité (62) est en outre monté sur un crochet aval (582b) du carter aval (58) situé plus en aval du carter aval (58) que le crochet amont (580a,660a) sur lequel est monté l'élément d'étanchéité (62).

5. Ensemble selon l'une des revendications précédentes, dans lequel :
- l'élément d'étanchéité (62) comprend un rebord amont (620a2) définissant une excroissance en saillie vers l'amont par rapport au matériau abradable (64), et
- le crochet amont (660a) de la virole annulaire (66) présente un rebord circonférentiel qui présente une paroi radialement intérieure (660a1) et une paroi radialement extérieure (660a2) entre lesquels le rebord amont (620a2) de l'élément d'étanchéité (62) est engagé.

6. Ensemble selon la revendication 5, dans lequel la paroi radialement extérieure (660a2) du rebord circonférentiel double est axiale et un rebord radialement intérieur (583) du carter aval (58) est en butée contre lui.

7. Ensemble selon l'une des revendications 1 à 4, dans lequel, étant dépourvue de crochet amont sur lequel est monté l'élément d'étanchéité (62), la virole annulaire (66) présente un rebord circonférentiel (660) qui est axial et avec lequel est en butée un rebord radialement intérieur (583) du carter aval (58).

8. Ensemble selon l'une des revendications précédentes, dans lequel la virole annulaire (66) présente une extrémité radialement intérieure de part et d'autre de laquelle s'étendent :
- en amont, une butée axiale (481) du distributeur, en butée contre une surface radiale de la virole annulaire (66),
- en aval une excroissance (623) d'extrémité amont de l'élément d'étanchéité (62) en saillie vers l'amont par rapport au matériau abradable (64).

9. Ensemble selon l'une des revendications précédentes, dans lequel :
- des joints d'étanchéité amont (76a) et des joints d'étanchéité aval (76b) sont disposés entre la virole annulaire (66) et respectivement, en amont, le distributeur (48a) et, en aval, l'élément d'étanchéité (62), et,
- de façon radialement extérieure par rapport auxdits joints d'étanchéité (76), la virole annulaire (66) présente au moins un circuit de ventilation (80) faisant communiquer
-- un volume amont (78a) défini entre la virole annulaire (66), le carter amont (55) et le distributeur (48a) et qui est isolé, par les joints d'étanchéité amont (76a), d'une veine de fluide (22) dans laquelle s'étendent, de façon radialement intérieure par rapport auxdits joints d'étanchéité, une partie du distributeur (48a) et une partie de l'aubage mobile (44a), et
-- un volume aval (78b) défini entre la virole annulaire (66), le carter aval et l'aubage mobile (44a) et qui est isolé de ladite veine de fluide (22) par les joints d'étanchéité aval (76b).

10. Ensemble selon l'une des revendications 5 à 7, seule ou en combinaison avec l'une des revendications 8 ou 9, dans lequel :
- de part et d'autre de la virole annulaire (66), le carter amont (55) et le carter aval (58) présentent chacun un rebord radial (555,585) à travers lesquels passent, en tant que dits moyens de fixation amovibles, des boulons (681) assurant ladite fixation démontable de la virole annulaire (66), et
- la virole annulaire (66) se présente comme un anneau radial qui se prolonge radialement vers l'intérieur, au-delà desdits rebords radiaux du carter amont (55) et du carter aval (58), et au-delà dudit rebord circonférentiel (660, 660a1,660a2), jusqu'à une extrémité interposée axialement entre le distributeur et l'élément d'étanchéité (62).

11. Ensemble selon la revendication 8, seule ou en combinaison avec l'une des revendications 9 ou 10, dans lequel :
- l'élément d'étanchéité (62) est circonférentiellement formé en plusieurs parties sectorisées autour dudit axe (X),
- les excroissances (623) d'extrémité amont de deux parties sectorisées circonférentiellement successives de l'élément d'étanchéité (62) sont reliées circonférentiellement entre elles par des languettes d'étanchéité (624).

12. Ensemble selon la revendication 5, seule ou en combinaison avec l'une des revendications 6 à 11, dans lequel :
- l'élément d'étanchéité (62) est circonférentiellement formé en plusieurs parties sectorisées autour dudit axe (X),
- les rebords amonts (620a2) de deux parties sectorisées circonférentiellement successives de l'élément d'étanchéité (62) sont reliées circonférentiellement entre elles par des languettes d'étanchéité (626).

13. Turbomachine aéronautique comprenant un ensemble (60) selon l'une quelconque des revendications 1 à 12.

## Patentansprüche

1. Anordnung für ein Flugzeugturbinentriebwerk, die sich um eine Achse (X) herum erstreckt und umfasst:
- ein stromaufwärtiges Gehäuse (55), das um die Achse (X) herum angeordnet ist und an dem eine Leitschaufel (48a) befestigt ist, wobei das stromaufwärtige Gehäuse (55) in axialer Richtung stromabwärts gefolgt ist von
- einem stromabwärtigen Gehäuse (58), das um die Achse (X) herum angeordnet ist und an dem ein Dichtungselement (62) mit einem Verschleißmaterial (64) angebracht ist, das dazu bestimmt ist, einer Laufschaufel (44a) des Turbinentriebwerks gegenüberzuliegen, die dazu ausgelegt ist, sich um die Achse (X) zu drehen,
- einem Mantelring (66), der um die Achse (X) herum zwischen dem stromaufwärtigen Gehäuse (55) und dem stromabwärtigen Gehäuse (58) angeordnet ist, und
- lösbaren Befestigungsmitteln (68), um den Mantelring (66), das stromaufwärtige Gehäuse (55) und das stromabwärtige Gehäuse (58) lösbar aneinander zu befestigen, wobei
- entweder der Mantelring (66) einen stromaufwärtigen Haken (660a) aufweist, an dem das Dichtungselement (62) zu seiner Befestigung an das stromabwärtige Gehäuse (58) angebracht ist,
- oder das stromabwärtige Gehäuse (58) einen stromaufwärtigen Haken (580a) aufweist, an dem das Dichtungselement (62) zu seiner Befestigung an das stromabwärtige Gehäuse (58) angebracht ist,
**dadurch gekennzeichnet, dass**
die Leitschaufel (48a) zu ihrer Befestigung an das stromaufwärtige Gehäuse (55) an einem stromabwärtigen Haken (550b) des stromaufwärtigen Gehäuses (55) angebracht ist, ohne mit dem Mantelring (66) verhakt zu sein.

2. Anordnung nach Anspruch 1, wobei
- dann, wenn das stromabwärtige Gehäuse (58) den stromaufwärtigen Haken (580a) aufweist, an dem das Dichtungselement (62) zu seiner Befestigung an das stromabwärtige Gehäuse angebracht ist,
- der Mantelring keinen solchen stromaufwärtigen Haken zur Befestigung des Dichtungselements (62) an das stromabwärtige Gehäuse aufweist.

3. Anordnung nach Anspruch 1 oder 2,
wobei die Leitschaufel (48a) zu ihrer Befestigung an das stromaufwärtige Gehäuse (55) ferner an einem stromaufwärtigen Haken (550a) des stromaufwärtigen Gehäuses (55) angebracht ist, der weiter stromaufwärts vom stromaufwärtigen Gehäuse (55) angeordnet ist als der stromabwärtige Haken (550b) des stromaufwärtigen Gehäuses (55).

4. Anordnung nach einem der vorhergehenden Ansprüche,
wobei das Dichtungselement (62) zu seiner Befestigung an das stromabwärtige Gehäuse (58) ferner an einem stromabwärtigen Haken (582b) des stromabwärtigen Gehäuses (58) angebracht ist, der weiter stromabwärts von dem stromabwärtigen Gehäuse (58) angeordnet ist als der stromaufwärtige Haken (580a, 660a), an dem das Dichtungselement (62) angebracht ist.

5. Anordnung nach einem der vorhergehenden Ansprüche, wobei
- das Dichtungselement (62) eine stromaufwärtige Kante (620a2) aufweist, die einen Vorsprung definiert, der stromaufwärts von dem Verschleißmaterial (64) vorsteht, und
- der stromaufwärtige Haken (660a) des Mantelrings (66) eine Umfangskante aufweist, die einen radial innere Wand (660a1) und eine radial äußere Wand (660a2) aufweist, zwischen welche die stromaufwärtige Kante (620a2) des Dichtungselements (62) eingreift.

6. Anordnung nach Anspruch 5,
wobei die radial äußere Wand (660a2) der doppelwandigen Umfangskante axial verläuft und eine radial innere Kante (583) des stromabwärtigen Gehäuses (58) daran anliegt.

7. Anordnung nach einem der Ansprüche 1 bis 4,
wobei der Mantelring (66) dann, wenn kein stromaufwärtiger Haken vorhanden ist, an dem das Dichtungselement (62) angebracht ist, eine Umfangskante (660) aufweist, die axial verläuft und an der eine radial innere Kante (583) des stromabwärtigen Gehäuses (58) anliegt.

8. Anordnung nach einem der vorhergehenden Ansprüche,
wobei der Mantelring (66) ein radial inneres Ende aufweist, auf dessen beiden Seiten verlaufen:
- stromaufwärts ein axialer Anschlag (481) der Leitschaufel, der an einer radialen Fläche des Mantelrings (66) anliegt,
- stromabwärts ein Vorsprung (623) am stromaufwärtigen Ende des Dichtungselements (62), der in Bezug auf das Verschleißmaterial (64) stromaufwärts vorsteht.

9. Anordnung nach einem der vorhergehenden Ansprüche, wobei
- stromaufwärtige Dichtungen (76a) und stromabwärtige Dichtungen (76b) zwischen dem Mantelring (66) und der Leitschaufel (48a) stromaufwärts bzw. dem Dichtungselement (62) stromabwärts angeordnet sind, und
- radial außerhalb der Dichtungen (76) der Mantelring (66) zumindest einen Belüftungskreislauf (80) aufweist zum Verbinden von
-- einem stromaufwärtigen Raum (78a), der zwischen dem Mantelring (66), dem stromaufwärtigen Gehäuse (55) und der Leitschaufel (48a) ausgebildet ist und durch die stromaufwärtigen Dichtungen (76a) von einem Strömungskanal (22) getrennt ist, in dem sich ein Teil der Leitschaufel (48a) und ein Teil der Laufschaufel (44a) radial innen bezüglich der Dichtungen erstrecken, und
-- einem stromabwärtigen Raum (78b), der zwischen dem Mantelring (66), dem stromabwärtigen Gehäuse und der Laufschaufel (44a) ausgebildet ist und durch die stromabwärtigen Dichtungen (76b) von dem Strömungskanal (22) getrennt ist.

10. Anordnung nach einem der Ansprüche 5 bis 7, allein oder in Kombination mit einem der Ansprüche 8 oder 9, wobei
- auf beiden Seiten des Mantelrings (66) das stromaufwärtige Gehäuse (55) und das stromabwärtige Gehäuse (58) jeweils eine radiale Kante (555, 585) aufweisen, durch die hindurch als lösbare Befestigungsmittel Bolzen (681) hindurchgeführt sind, die die lösbare Befestigung des Mantelrings (66) sicherstellen, und
- der Mantelring (66) als ein radialer Ring ausgebildet ist, der sich radial nach innen über die radialen Kanten des stromaufwärtigen Gehäuses (55) und des stromabwärtigen Gehäuses (58) und über die Umfangskante (660, 660a1, 660a2) hinaus bis zu einem Ende fortsetzt, das axial zwischen der Leitschaufel und dem Dichtungselement (62) angeordnet ist.

11. Anordnung nach Anspruch 8, allein oder in Kombination mit einem der Ansprüche 9 oder 10, wobei
- das Dichtungselement (62) in Umfangsrichtung in mehreren um die Achse (X) sektorisierten Teilen ausgebildet ist,
- am stromaufwärtigen Ende die Vorsprünge (623) zweier in Umfangsrichtung aufeinanderfolgender sektorisierter Teile des Dichtungselements (62) in Umfangsrichtung durch Dichtungslappen (624) miteinander verbunden sind.

12. Anordnung nach Anspruch 5, allein oder in Kombination mit einem der Ansprüche 6 bis 11, wobei
- das Dichtungselement (62) in Umfangsrichtung in mehreren um die Achse (X) sektorisierten Teilen ausgebildet ist,
- die stromaufwärtigen Kanten (620a2) zweier in Umfangsrichtung aufeinanderfolgender sektorisierter Teile des Dichtungselements (62) in Umfangsrichtung durch Dichtungslappen (626) miteinander verbunden sind.

13. Flugzeugturbinentriebwerk mit einer Anordnung (60) nach einem der Ansprüche 1 bis 12.

## Claims

1. Aeronautical turbine engine assembly extending about an axis (X) and comprising:
- an upstream casing (55) disposed around the axis (X) and to which a guide blading of a distributor (48a) is fastened, the upstream casing (55) being followed axially, in the downstream direction, by
- a downstream casing (58) disposed around the axis (X), whereon a sealing element (62) provided with an abradable material (64) intended to be facing a mobile guide blading (44a) of the turbine engine configured to rotate about the axis (X) is mounted,
- a shroud ring (66) inserted, about the axis (X), between the upstream casing (55) and the downstream casing (58), and
- removable fastening means (68) for fastening the shroud ring (66), the upstream casing (55) and the downstream casing (58) together, detachably, and:
- either the shroud ring (66) has an upstream hook (660a) whereon the sealing element (62) is mounted for said fastening thereof to the downstream casing (58),
- or the downstream casing (58) has an upstream hook (580a) whereon the sealing element (62) is mounted for said fastening thereof to the downstream casing (58),
**characterized in that**:
- for said fastening thereof to the upstream casing (55), the distributor (48a) is mounted on a downstream hook (550b) of the upstream casing (55), without being hooked to the shroud ring (66).

2. Assembly according to claim 1, wherein:
- if the downstream casing (58) has said upstream hook (580a) whereon the sealing element (62) is mounted for said fastening thereof to the downstream casing,
- then the shroud ring is devoid of such an upstream hook intended for said fastening of the sealing element (62) to the downstream casing.

3. Assembly according to claim 1 or 2, wherein, for said fastening thereof to the upstream casing (55), the distributor (48a) is furthermore mounted on an upstream hook (550a) of the upstream casing (55) located more upstream from the upstream casing (55) than the downstream hook (550b) of the upstream casing (55).

4. Assembly according to one of the preceding claims, wherein, for said fastening thereof to the downstream casing (58), the sealing element (62) is furthermore mounted on a downstream hook (582b) of the downstream casing (58) located more downstream from the downstream casing (58) than the upstream hook (580a,660a) whereon the sealing element (62) is mounted.

5. Assembly according to one of the preceding claims, wherein:
- the sealing element (62) comprises an upstream edge (620a2) defining a protuberance projecting in the upstream direction with respect to the abradable material (64), and
- the upstream hook (660a) of the shroud ring (66) has a circumferential edge which has a radially inner wall (660a1) and a radially outer wall (660a2) between which the upstream edge (620a2) of the sealing element (62) is engaged.

6. Assembly according to claim 5, wherein the radially outer wall (660a2) of the double circumferential edge is axial and a radially inner edge (583) of the downstream casing (58) abuts against it.

7. Assembly according to one of claims 1 to 4, wherein, being devoid of an upstream hook whereon the sealing element (62) is mounted, the shroud ring (66) has a circumferential edge (660) which is axial and against which a radially inner edge (583) of the downstream casing (58) abuts.

8. Assembly according to one of the preceding claims, wherein the shroud ring (66) has a radially inner end on either side whereof extend:
- upstream, an axial stop (481) of the distributor, abutting against a radial surface of the shroud ring (66),
- downstream, an upstream end protuberance (623) of the sealing element (62) projecting in the upstream direction with respect to the abradable material (64).

9. Assembly according to one of the preceding claims, wherein:
- upstream seals (76a) and downstream seals (76b) are disposed between the shroud ring (66) and respectively, upstream, the distributor (48a) and, downstream, the sealing element (62), and,
- radially externally with respect to said seals (76), the shroud ring (66) has at least one ventilation circuit (80) connecting
-- an upstream volume (78a) defined between the shroud ring (66), the upstream casing (55) and the distributor (48a) and which is isolated, by the upstream seals (76a), from a jet of fluid (22) wherein, radially internally with respect to said seals, a portion of the distributor (48a) and a portion of the mobile guide blading (44a) extend, and
-- a downstream volume (78b) defined between the shroud ring (66), the downstream casing and the mobile guide blading (44a) and which is isolated from said jet of fluid (22) by the downstream seals (76b).

10. Assembly according to one of claims 5 to 7, alone or in combination with one of claims 8 or 9, wherein:
- on either side of the shroud ring (66), the upstream casing (55) and the downstream casing (58) each have a radial edge (555,585) through which, as said removable fastening means, bolts (681) for detachably fastening the shroud ring (66) pass, and
- the shroud ring (66) is in the form of a radial ring which is extended radially inward, beyond said radial edges of the upstream casing (55) and the downstream casing (58), and beyond said circumferential edge (660, 660a1,660a2), up to an end inserted axially between the distributor and the sealing element (62).

11. Assembly according to claim 8, alone or in combination with one of claims 9 or 10, wherein:
- the sealing element (62) is circumferentially formed of several sectorized portions around said axis (X),
- the upstream end protuberances (623) of two circumferentially successive sectorized portions of the sealing element (62) are circumferentially connected with each other by sealing tabs (624).

12. Assembly according to claim 5, alone or in combination with one of claims 6 to 11, wherein:
- the sealing element (62) is circumferentially formed of several sectorized portions around said axis (X),
- the upstream edges (623) of two circumferentially successive sectorized portions of the sealing element (62) are circumferentially connected with each other by sealing tabs (626).

13. Aeronautical turbine engine comprising an assembly (60) according to any one of claims 1 to 12.
